# EUROPEAN PATENT SPECIFICATION

(11) **EP 4 095 409 B1**
(45) Date of publication and mention of the grant of the patent: **30.10.2024**
(21) Application number: 21176309.9
(22) Date of filing: 27.05.2021
(51) Int. Cl.: F16D 65/00

(54) **DISC BRAKE FOR A COMMERCIAL VEHICLE**
SCHEIBENBREMSE FÜR EIN NUTZFAHRZEUG
FREIN À DISQUE POUR UN VÉHICULE UTILITAIRE

(43) Date of publication of application: 30.11.2022
(73) Proprietor: KNORR-BREMSE Systeme für Nutzfahrzeuge GmbH, 80809 München (DE)
(72) Inventor: DEROUAULT, Sylvain, 14100 Hermival les Vaux (FR); LETOT, Guillaume, 14940 Sannerville (FR)

(56) References cited:
- EP-A1- 3 236 099
- DE-A1- 102012 016 712

## Description

The invention relates to a disc brake for a commercial vehicle with a pneumatic brake cylinder, a brake disc, a brake caliper, a brake application device and with brake pads, wherein the brake caliper engages over the brake disc and the brake application device, which can be actuated by the brake cylinder and by means of which the brake pads can be pressed against the brake disc on both sides during braking, is arranged in the brake caliper, wherein a retractable and extendable piston rod of the brake cylinder is in engagement with the brake application device and the brake caliper is detachably fastened to the brake cylinder by means of a fastening device, according to the generic features of claim 1, a commercial vehicle with at least one such disc brake according to claim 11 and a method for detaching the brake cylinder from the brake caliper of the disc brake according to claim 10.

A disc brake is known from DE 10 2012 016 712 A1. The fastening device there has bolts provided with an external thread, which are fastened in the brake cylinder, project away from the brake cylinder and into screw eyes of the brake caliper, where they are locked by means of nuts. The disadvantage of this type of fastening device is that when the brake cylinder is detached from the brake caliper, for example for repair purposes, the brake cylinder must be pulled away from the brake caliper in the direction of the bolts, at least over the length of the bolts, so that the bolts of the brake cylinder can be pulled out of the bolt eyes of the brake caliper. However, this requires a certain amount of space within the wheel housing of the commercial vehicle in which the disc brake is located, which is often not available. Furthermore, the disassembly of the brake cylinder from the brake caliper then is time consuming. A generic disc brake is known from EP 3 236 099 A1.

It is the object of this invention to provide a disc brake for a commercial vehicle which is easier to install and remove. Furthermore, a vehicle with such a disc brake as well as a method for detaching the brake cylinder of the disc brake from the brake caliper of the disc brake are to be provided.

This object is solved according to the invention by the features of claims 1, 10 and 11.

### Disclosure of the invention

The invention is based on a disc brake for a commercial vehicle with a brake cylinder, a brake disc, a brake caliper, a brake application device and with brake pads, wherein the brake caliper is configured to engage over the brake disc, and the brake application device, which can be actuated by the brake cylinder, is arranged in the brake caliper, by means of which the brake pads can be pressed against the brake disc on both sides during braking, and an extendable and retractable piston rod of the brake cylinder being in engagement with the brake application device, and the brake caliper being detachably fastened to the brake cylinder by means of a fastening device.

The retractable piston rod of the brake cylinder engages with the brake application device, for example, in that the brake application device has a receptacle for one end of the piston rod, in which this end engages.

The brake caliper is detachably attached to the brake cylinder by means of a fastening device, meaning that the brake caliper and the brake cylinder can be dismantled from each other without destroying them by loosening the fastening device.

According to the invention, it is then provided that the fastening device comprises at least one screw with a screw head, a screw shank and an external thread formed on the screw shank, and at least one bore formed in or on the brake cylinder with an internal thread, into which the screw shank with the external thread is screwed, the screw head being locked on a counter surface of the brake caliper. The counter surface can be formed, for example, by an edge of a screw eye on the brake caliper.

The screw head of the at least one screw therefore points towards the brake caliper and is locked there in a through hole, in particular in a screw eye, while the screw shank points towards the brake cylinder and is screwed there in the bore.

A screw connection is therefore provided between the brake caliper and the brake cylinder, whereby, in contrast to DE 10 2012 016 712 A1 mentioned at the beginning, the conditions are reversed and the brake cylinder is not provided with at least one protruding bolt, but with at least one bore into which a screw is screwed with its screw head countered, for example, at the at the edge of a screw eye or a through bore of the brake caliper. This means that the brake cylinder does not have to be removed any further from the brake caliper than is necessary to disengage the piston rod of the brake cylinder from the brake application device of the caliper. This advantageously reduces the space required for disassembly within the wheel housing of the commercial vehicle.

The bore can be formed in a wall of the brake cylinder or in a separate body which is detachably or non-detachably connected to the wall of the brake cylinder.

Also, the separate body may be located inside the brake cylinder and the screw shank may extend through a through hole in the wall of the brake cylinder and be screwed into the bore in the body.

In particular, the body can be welded to the wall of the brake cylinder.

A ring washer can also be arranged between the screw head and the counter surface, which enables the screw connection to be set.

According to a further embodiment, the brake caliper can have a recess in the area of the screw head in such a way that, seen in a direction perpendicular to a screw axis of the screw, a screwdriving tool can be applied to the screw head and then the screw can be screwed by means of the screwdriving tool. The screw head can have any attachment surface for the screwdriving tool, for example an outer polygonal profile, in particular an outer hexagonal profile for an open-end spanner, or an inner polygonal profile, for example for an Allen key.

Preferably, the at least one screw and the piston rod of the brake cylinder are also arranged parallel to each other.

According to a further embodiment, the pneumatic brake cylinder can be a part of a combined pneumatic service and spring brake cylinder or a separate pneumatic service brake cylinder. In both cases, the piston rod can then be a service brake piston rod of the service brake cylinder.

The method according to the invention for detaching the brake cylinder from the brake caliper of the disc brake then comprises at least the following steps:
a) Attaching a screwdriving tool to the screw head,
b) Unscrewing at least one screw from the bore,
c) Removing at least one screw,
d) Disengaging the piston rod of the brake cylinder from the brake application device in the brake caliper.

For a disassembly or the detaching of the brake cylinder from the brake caliper, after loosening and removing the at least one screw, the brake cylinder therefore only has to be removed from the brake caliper as seen in particular in the direction of a longitudinal axis of the at least one screw until the piston rod of the brake cylinder is out of engagement with the brake application device in the brake caliper.

The invention also includes a commercial vehicle having at least one disc brake described above.

### Drawing

An embodiment of the invention is shown below in the drawing and explained in more detail in the following description. The drawing shows
- Fig.1: a perspective partial sectional view of a disc brake according to a preferred embodiment with a pneumatic brake cylinder attached to a brake caliper by means of a detachable fastening device;
- Fig.2: an enlarged section of Fig. 1 showing the fastening device;
- Fig. 3: a perspective interior view of the brake cylinder of the disc brake of Fig. 1;
- Fig. 4: an enlarged section of the interior view of Fig. 3;
- Fig. 5: a side view of the disc brake of Fig. 1 in an assembled state;
- Fig. 6: a side view of the disc brake of Fig. 1 in a state during disassembly of the brake cylinder from the brake caliper.

### Description of an embodiment

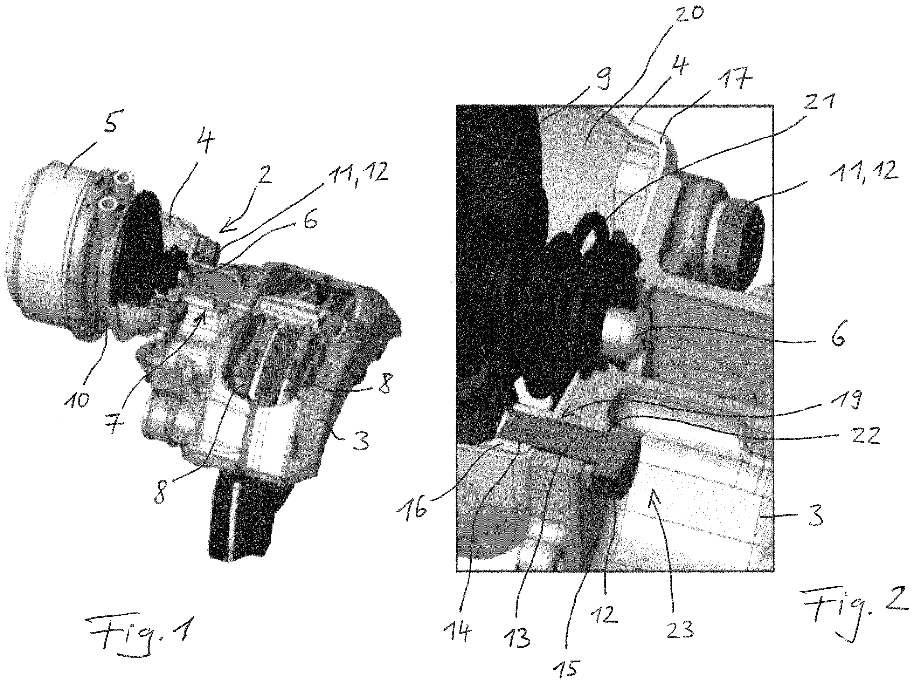

**Fig. 1** shows a perspective partial sectional view of a disc brake 1 of a commercial vehicle according to a preferred embodiment, with a pneumatic brake cylinder 4 detachably fastened to a brake caliper 3 by means of a detachable fastening device 2. The pneumatic brake cylinder 4 is here, for example, a pneumatic service brake cylinder which forms a structural unit with a spring brake cylinder 5, which then represents a so-called combination cylinder of pneumatic service brake cylinder 4 and pneumatic spring brake cylinder 5.

The disc brake 1 comprises the pneumatic service brake cylinder 4, a brake disc not shown here, the brake caliper 3, which engages over the brake disc, and a brake application device 7 not shown in detail here, which is arranged in the brake caliper 3 and can be actuated by a piston rod 6 of the service brake cylinder 4, as well as brake pads 8.

More precisely, the piston rod 6 is connected to a brake piston 9 of the service brake cylinder 4, which is actuated by venting and deaeration a brake chamber 10 of the service brake cylinder 4, wherein the piston rod 6 moves out of the service brake cylinder 4 during venting and moves into the service brake cylinder 4 during deaeration, for example. One end of the piston rod 6 engages with a receptacle of the brake application device 7 in such a way that the retraction or extension movement of the piston rod 6 is transmitted to a mechanism of the brake application device 7, whereupon the latter presses the brake pads 8 against the brake disc on both sides when the brake is applied (ventilation of the brake chamber 10) and releases them from the brake disc when the brake is released (deaeration of the brake chamber 10).

The fastening device 2, by means of which the brake caliper 3 and the service brake cylinder 4 can be mounted or released from one another, comprises several screw connections. Such a screw connection comprises a screw 11 with a screw head 12, a screw shank 13 and an external thread formed on the screw shank 13 and at least one bore 14 formed here, for example, in the service brake cylinder 4 with an internal thread, into which the screw shank 13 with the external thread is screwed, as is visible in particular in **Fig. 2****.** The screw head 12 is locked on a counter surface 15 of the brake caliper 3, which is formed here for example by an edge of a screw eye of the brake caliper 3. Preferably, the screws 11 of the screw connections and the piston rod 6 of the service brake cylinder 4 are arranged parallel to each other.

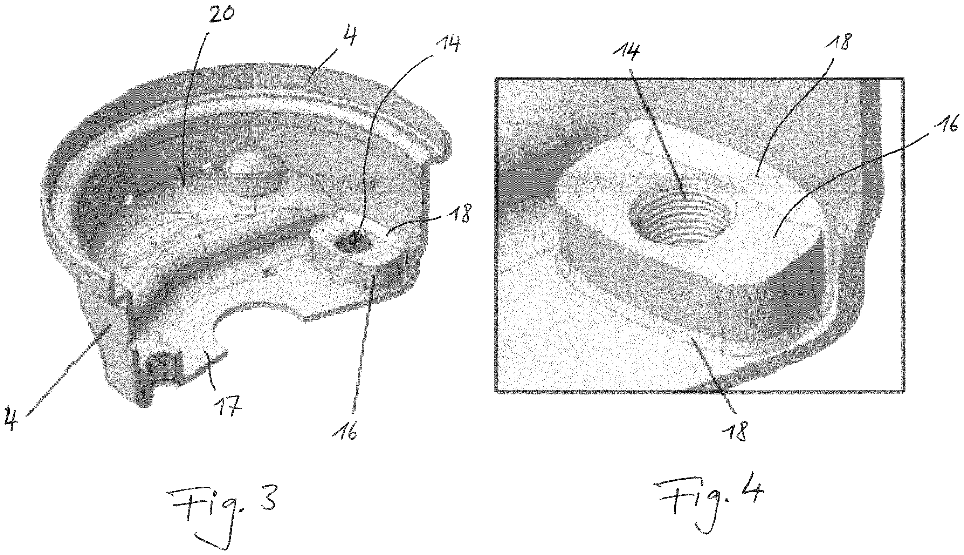

The bore 14 is formed here, for example, as a blind bore or through bore in a body 16, which is arranged here, for example, separately, inside the service brake cylinder 4, as **Fig. 3** shows, and is welded in particular to a wall 17 of the service brake cylinder 4 here, for example, by means of a circumferential weld seam 18, as **Fig. 4** shows. The bore 14 is then provided on its radially inner circumferential surface with the internal thread into which the external thread of the screw 11 is screwed. The body 16 is, for example, cuboid-shaped, with at least one of its outer surfaces being designed to fit snugly against the inner surface of the wall 17 of the service brake cylinder 4.

The screw shank 13 of the screw 11 extends through a through hole 19 in the wall 17 of the brake cylinder 4 to be screwed to the hole 14 of the body 16. In particular, the body 16 is arranged in a spring chamber 20 separated from the brake chamber 10 by the brake piston 9, which is in communication with the atmosphere and in which is housed a piston spring 21 biasing the brake piston 9 to the released position. In this respect, this spring chamber 20 does not have to be pressure-tight. Also, an annular washer 22 is arranged here between the screw head 12 and the counter surface 15, here for example in the form of the edge of the screw eye.

As best shown in **Fig. 2**, the brake caliper 3 can have a recess 23 in the area of the screw head 12 or in the area of the counter surface 15 (e.g. the screw eye) in such a way that, viewed in a direction perpendicular to a screw axis of the screw 11, a screwdriving tool can be applied to the screw head 12 and then the screw 11 can be screwed by means of the screwdriving tool. For this purpose, the screw head 12 can have any attachment surface for the screwdriving tool, in this case, for example, an outer hexagonal profile for an open-end spanner. By applying the open-end spanner to the hexagonal profile of the screw head 12, the screw connection can therefore be assembled or loosened. Preferably, the fastening device comprises several such screw connections, in particular arranged distributed over the circumference of the service brake cylinder 4.

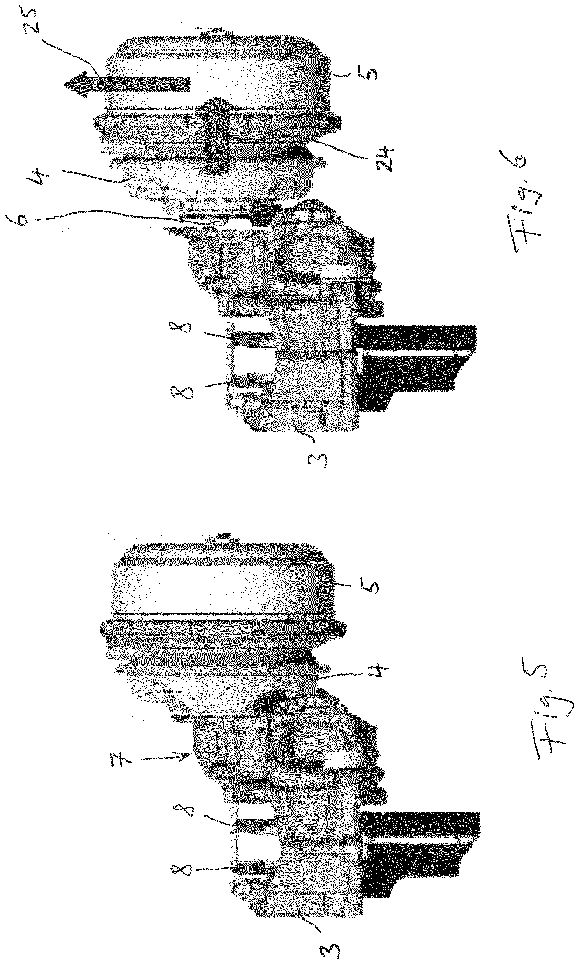

Therefore, starting from the mounted state of the service brake cylinder 4 on the brake caliper 3 of the disc brake 1 shown in **Fig. 5****,** in order to detach the service brake cylinder 4 from the brake caliper 3, for example, the open-end spanner is applied to the hexagonal profiles of the bolt heads 12 and then the bolts 11 are unscrewed from the bores 14 of the bodies 16 or of the service brake cylinder 4 and then removed. Further, the end of the piston rod 6 of the service brake cylinder 4 is disengaged from the associated receptacle of the brake application device 7 in the brake caliper 3 by pulling the service brake cylinder 4 off the brake caliper 3 a short distance in the first direction indicated by the first arrow 24 in **Fig. 6****,** this first direction preferably being parallel to the piston rod 6. When the end of the piston rod 6 is then out of engagement with the associated receptacle of the brake application device 7, the service brake cylinder 4, which has been released from the brake caliper 3, is removed from the brake caliper 3 in a second direction indicated by the second arrow 25 in **Fig. 6****,** which is preferably perpendicular to the first direction, and can then be pulled out of the wheel housing transversely, for example.

For a disassembly of the service brake cylinder 4 from the brake caliper 3, after loosening and removing the screws 11, the service brake cylinder 4 must therefore only be removed from the brake caliper 3, in particular as seen in the direction of the longitudinal axes of the screws 11, until the end of the piston rod 6 of the service brake cylinder 4 is out of engagement with the associated receptacle of the brake application device 7 in the brake caliper 3.

### List of reference signs

- 1: Disc brake
- 2: Fastening device
- 3: Brake caliper
- 4: Service brake cylinder
- 5: Spring brake cylinder
- 6: Piston rod
- 7: Brake application device
- 8: Brake pads
- 9: Brake piston
- 10: Braking chamber
- 11: Screw
- 12: Screw head
- 13: Screw shaft
- 14: Bore
- 15: Counter surface
- 16: Body
- 17: Wall
- 18: Weld
- 19: Through hole
- 20: Spring chamber
- 21: Piston spring
- 22: Recess
- 24: First arrow
- 25: Second arrow

## Claims

1. Disc brake (1) for a commercial vehicle with a pneumatic brake cylinder (4), a brake disc, a brake caliper (3), a brake application device (7) and with brake pads (8), wherein the brake caliper (3) is configured to engage over the brake disc and the brake application device (7), which can be actuated by the brake cylinder (4), is arranged in the brake caliper (3), by means of which the brake linings (8) can be pressed against the brake disc on both sides during braking, an extendable and retractable piston rod (6) of the brake cylinder (4) being in engagement with the brake application device (7), and the brake caliper (3) being detachably fastened to the brake cylinder (4) by means of a fastening device (2), **characterized in that** the fastening device (2) comprises at least one screw (11) with a screw head (12), a screw shank (13) and an external thread formed on the screw shank (13) and at least one bore (14) formed in or on the brake cylinder (4) with an internal thread, into which the screw shank (13) is screwed with the external thread, the screw head (12) being locked on a counter surface (15) of the brake caliper (3).

2. Disc brake according to claim 1, **characterized in that** the bore (14)
a) is formed in a wall (17) of the brake cylinder (4), or
b) is formed in a separate body (16) which is detachably or non-detachably connected to the wall (17) of the brake cylinder (4).

3. Disc brake according to claim 2, **characterized in that** the body (16) is arranged inside the brake cylinder (4) and the screw shank (13) extends through a through bore (19) in the wall (17) of the brake cylinder (4) and is screwed into the bore (14) of the body (16).

4. Disc brake according to claim 2 or 3, **characterized in that** the body (16) is welded to the wall (17) of the brake cylinder (4).

5. Disc brake according to one of the preceding claims, **characterized in that** an annular washer is arranged between the bolt head (12) and the counter surface (15).

6. Disc brake according to one of the preceding claims, **characterized in that** the counter surface (15) comprises a screw eye.

7. Disc brake according to one of the preceding claims, **characterized in that** the brake caliper (3) has a recess (23) in the region of the screw head (12) in such a way that, viewed in a direction perpendicular to a screw axis of the screw (11), a screwing tool can be applied to the screw head (12) and then the screw (12) can be screwed by means of the screwing tool.

8. Disc brake according to one of the preceding claims, **characterized in that** the at least one screw (11) and the piston rod (6) are arranged parallel to each other.

9. Disc brake according to one of the preceding claims, **characterized in that** the pneumatic brake cylinder (4)
a) is part of a combined service and spring brake cylinder, or
b) is a separate service brake cylinder.

10. Method for detaching the brake cylinder (4) from the brake caliper (3) of the disc brake (1) according to one of the preceding claims, **characterized by** at least the following steps:
a) Attaching a screwdriver to the screw head (12),
b) Unscrewing the at least one screw (11) from the bore (14),
c) Remove at least one screw (11),
d) Disengaging the piston rod (6) of the brake cylinder (4) from the brake application device (7) in the brake calliper (3).

11. Commercial vehicle with at least one disc brake according to at least one of claims 1 to 9.

## Patentansprüche

1. Scheibenbremse (1) für ein Nutzfahrzeug mit einem pneumatischen Bremszylinder (4), einer Bremsscheibe, einem Bremssattel (3), einer Bremsanwendungsvorrichtung (7) und mit Bremsklötzen (8), wobei der Bremssattel (3) konfiguriert ist, um der Bremsscheibe überzugreifen, und die Bremsanwendungsvorrichtung (7), die durch den Bremszylinder (4) betätigt werden kann, in dem Bremssattel (3) angeordnet ist, anhand dessen die Bremsbeläge (8) beim Bremsen an beiden Seiten gegen die Bremsscheibe gedrückt werden können, wobei eine ausfahrbare und einziehbare Kolbenstange (6) des Bremszylinders (4) mit der Bremsanwendungsvorrichtung (7) in Eingriff steht, und der Bremssattel (3) anhand einer Befestigungsvorrichtung (2) lösbar an dem Bremszylinder (4) befestigt ist, **dadurch gekennzeichnet, dass** die Befestigungsvorrichtung (2) zumindest eine Schraube (11) mit einem Schraubenkopf (12), einem Schraubenschaft (13) und einem an dem Schraubenschaft (13) gebildeten Außengewinde und zumindest eine in oder an dem Bremszylinder (4) gebildete Bohrung (14) mit einem Innengewinde umfasst, in welche der Schraubenschaft (13) mit dem Außengewinde eingeschraubt ist, wobei der Schraubenkopf (12) an einer Gegenoberfläche (15) des Bremssattels (3) verriegelt ist.

2. Scheibenbremse nach Anspruch 1, **dadurch gekennzeichnet, dass** die Bohrung (14)
a) in einer Wand (17) des Bremszylinders (4) gebildet ist, oder
b) in einem separaten Körper (16) gebildet ist, der lösbar oder nicht lösbar mit der Wand (17) des Bremszylinders (4) verbunden ist.

3. Scheibenbremse nach Anspruch 2, **dadurch gekennzeichnet, dass** der Körper (16) innerhalb des Bremszylinders (4) angeordnet ist und sich der Schraubenschaft (13) durch eine Durchgangsbohrung (19) in der Wand (17) des Bremszylinders (4) erstreckt und in die Bohrung (14) des Körpers (16) eingeschraubt ist.

4. Scheibenbremse nach Anspruch 2 oder 3, **dadurch gekennzeichnet, dass** der Körper (16) mit der Wand (17) des Bremszylinders (4) verschweißt ist.

5. Scheibenbremse nach einem der vorstehenden Ansprüche, **dadurch gekennzeichnet, dass** zwischen dem Bolzenkopf (12) und der Gegenoberfläche (15) eine ringförmige Unterlegscheibe angeordnet ist.

6. Scheibenbremse nach einem der vorstehenden Ansprüche, **dadurch gekennzeichnet, dass** die Gegenoberfläche (15) eine Ösenschraube umfasst.

7. Scheibenbremse nach einem der vorstehenden Ansprüche, **dadurch gekennzeichnet, dass** der Bremssattel (3) in dem Bereich des Schraubenkopfes (12) eine Aussparung (23) aufweist, sodass, in einer Richtung senkrecht zu einer Schraubachse der Schraube (11) betrachtet, ein Schraubwerkzeug an den Schraubenkopf (12) angelegt werden kann und die Schraube (12) danach anhand des Schraubwerkzeugs eingeschraubt werden kann.

8. Scheibenbremse nach einem der vorstehenden Ansprüche, **dadurch gekennzeichnet, dass** die zumindest eine Schraube (11) und die Kolbenstange (6) parallel zueinander angeordnet sind.

9. Scheibenbremse nach einem der vorstehenden Ansprüche, **dadurch gekennzeichnet, dass** der pneumatische Bremszylinder (4)
a) Teil eines kombinierten Betriebs- und Federspeicherbremszylinders ist, oder
b) ein separater Betriebsbremszylinder ist.

10. Verfahren zum Lösen des Bremszylinders (4) von dem Bremssattel (3) der Scheibenbremse (1) nach einem der vorstehenden Ansprüche, **gekennzeichnet durch** zumindest die folgenden Schritte:
a) Anlegen eines Schraubendrehers an dem Schraubenkopf (12),
b) Herausschrauben der zumindest einen Schraube (11) aus der Bohrung (14),
c) Entfernen zumindest einer Schraube (11),
d) Lösen der Kolbenstange (6) des Bremszylinders (4) von der Bremsanwendungsvorrichtung (7) in dem Bremssattel (3).

11. Nutzfahrzeug mit zumindest einer Scheibenbremse nach zumindest einem der Ansprüche 1 bis 9.

## Revendications

1. Frein à disque (1) pour un véhicule utilitaire comportant un cylindre de frein pneumatique (4), un disque de frein, un étrier de frein (3), un dispositif d'application de frein (7) et des plaquettes de frein (8), dans lequel l'étrier de frein (3 ) est configuré pour venir en prise sur le disque de frein et le dispositif d'application de frein (7), qui peut être actionné par le cylindre de frein (4), est agencé dans l'étrier de frein (3), au moyen duquel les garnitures de frein (8) peuvent être pressées des deux côtés contre le disque de frein pendant un freinage, une tige de piston extensible et rétractable (6) du cylindre de frein (4) étant en prise avec le dispositif d'application de frein (7) et l'étrier de frein (3) étant fixé de manière amovible au cylindre de frein (4) au moyen d'un dispositif de fixation (2), **caractérisé en ce que** le dispositif de fixation (2) comprend au moins une vis (11) avec une tête de vis (12), une tige de vis (13) et un filetage externe formé sur la tige de vis (13) et au moins un alésage (14) formé dans, ou sur, le cylindre de frein (4) avec un filetage interne, dans lequel la tige de vis (13) est vissée avec le filetage externe, la tête de vis (12) étant verrouillée sur une contre-surface (15) de l'étrier de frein (3).

2. Frein à disque selon la revendication 1, **caractérisé en ce que** l'alésage (14)
a) est formé dans une paroi (17) du cylindre de frein (4), ou
b) est formé dans un corps séparé (16) qui est relié de manière amovible ou non à la paroi (17) du cylindre de frein (4).

3. Frein à disque selon la revendication 2, **caractérisé en ce que** le corps (16) est agencé à l'intérieur du cylindre de frein (4) et la tige de vis (13) s'étend à travers un alésage traversant (19) ménagé dans la paroi (17) du cylindre de frein (4) et est vissée dans l'alésage (14) du corps (16).

4. Frein à disque selon la revendication 2 ou 3, **caractérisé en ce que** le corps (16) est soudé à la paroi (17) du cylindre de frein (4).

5. Frein à disque selon l'une des revendications précédentes, **caractérisé en ce qu'**une rondelle annulaire est agencée entre la tête de boulon (12) et la contre-surface (15).

6. Frein à disque selon l'une des revendications précédentes, **caractérisé en ce que** la contre-surface (15) comprend un oeillet de vis.

7. Frein à disque selon l'une des revendications précédentes, **caractérisé en ce que** l'étrier de frein (3) présente un évidement (23) dans la région de la tête de vis (12) de telle manière que, vu dans une direction perpendiculaire à une axe de vis de la vis (11), un outil de vissage puisse être appliqué à la tête de vis (12) et qu'ensuite, la vis (12) puisse être vissée au moyen de l'outil de vissage.

8. Frein à disque selon l'une des revendications précédentes, **caractérisé en ce que** la au moins une vis (11) et la tige de piston (6) sont agencées parallèlement l'une à l'autre.

9. Frein à disque selon l'une des revendications précédentes, **caractérisé en ce que** le cylindre de frein pneumatique (4)
a) fait partie d'un cylindre de frein de service et de frein à ressort combiné, ou
b) est un cylindre de frein de service distinct.

10. Procédé pour détacher le cylindre de frein (4) de l'étrier de frein (3) du frein à disque (1) selon l'une des revendications précédentes, **caractérisé par** au moins les étapes suivantes :
a) la fixation d'un tournevis à la tête de vis (12),
b) le dévissage de la au moins une vis (11) de l'alésage (14),
c) l'enlèvement d'au moins une vis (11),
d) la désolidarisation de la tige de piston (6) du cylindre de frein (4) à partir du dispositif d'application de frein (7) dans l'étrier de frein (3).

11. Véhicule utilitaire avec au moins un frein à disque selon au moins l'une des revendications 1 à 9.
